# EUROPÄISCHE PATENTSCHRIFT

(11) **EP 0 492 754 B1**
(45) Veröffentlichungstag und Bekanntmachung des Hinweises auf die Patenterteilung: **23.08.1995**
(21) Anmeldenummer: 91250326.5
(22) Anmeldetag: 05.12.1991
(51) Int. Cl.: H02B 1/36, H02B 1/48

(54) **Traganordnung für elektrische Installationsgeräte**
Support for electrical installation devices
Dispositif de support pour appareils d'installation électrique

(30) Priorität: 20.12.1990 DE 4041355
(43) Veröffentlichungstag der Anmeldung: 01.07.1992
(73) Patentinhaber: SIEMENS AKTIENGESELLSCHAFT, 80333 München (DE)
(72) Erfinder: Küster, Willi, W-6460 Gelnhausen (DE)

(56) Entgegenhaltungen:
- EP-A- 0 017 124
- EP-A- 0 123 788
- DE-A- 1 500 955
- DE-A- 2 814 995
- DE-U- 7 831 584
- DE-U- 8 607 337
- DE-U- 8 614 160

## Beschreibung

Die Erfindung betrifft eine Traganordnung für elektrische Installationsgeräte mit Fußteilen aufweisenden Traversen und mit einem die Traversen aufnehmenden Gehäuse, bestehend aus einem Gehäuseunterteil und einem dieses abschließenden Deckel, wobei die Wände des Gehäuseunterteiles Vorprägungen zur Herstellung von Durchtrittsöffnungen für zu einem benachbarten Gehäuse führende Stromschienen und/oder Leitungen besitzen und wobei die Traversen mit ihren Fußteilen an dem Bodenteil des Gehäuseunterteiles befestigbar sind.

Niederspannungs-Schaltanlagen sind in einer Reihe unterschiedlicher Bauformen bekannt, die insbesondere an die Art der Schaltaufgaben und der hierfür benötigten Schaltgeräte angepaßt sind. Wenn es darauf ankommt, Stromkreise mit kleinen als auch mit höheren Nennströmen zu versorgen, und die Möglichkeit der Erweiterung oder Änderung der Schaltanlage bestehen soll, so ist hierfür ein baukastenartiger Aufbau aus Einzelgehäusen besonders geeignet, die beispielsweise als Sammelschienengehäuse, Zählergehäuse oder als Gehäuse zur beliebigen Bestückung mit Installationsgeräten bereitgestellt werden. Eine Schaltanlage dieser Art ist beispielsweise in der Firmendruckschrift Siemens: Katalog NV 11, 1984, "Niederspannungs-Verteilersystem 8HP", Bestell-Nr. E86010-K1911-A-101-A4 beschrieben.

Während der Einbau der Installationsgeräte mittels genormter Hutschienen und der an den Installationsgeräten vorgesehenen entsprechenden Schnappelemente erfolgt und zeitsparend durchführbar ist, erfordert der Anschluß der zu- und abführenden Leitungen einen größeren Bedarf an Arbeitszeit. Hierbei wirkt es sich günstig aus, wenn die Klemmen der Installationsgeräte nach ihrer Befestigung in einem Gehäuse der beschriebenen Art gut zugänglich sind. Bei Installationsgeräten mit berührungsgeschützten Klemmen ist die Zugänglichkeit erschwert, weil die Leitungen im Unterschied zu den früheren Bauformen der Installationsgeräte nicht mehr von vorn unter die Klemmschrauben eingelegt werden können. Vielmehr werden die Leitungen bei berührungsgeschützten Anschlußklemmen seitlich in die Klemmvorrichtungen eingeführt. Dies erfordert es, daß zwischen dem Installationsgerät und einer anschließenden Wand eines das Installationsgerät aufnehmenden Gehäuseunterteiles ein ausreichender Abstand vorhanden ist. Eine Vergrößerung der Gehäuse zwecks Schaffung eines größeren Abstandes ist jedoch unerwünscht, weil ein neues System von Gehäusen bereitgestellt werden müßte und der Raumbedarf insgesamt vergrößert wäre.

Eine weitere Möglichkeit, den Zugang zu berührungsgeschützten Klemmen zu erleichtern, könnte darin bestehen, die Gesamthöhe der aus Gehäuseunterteil und Deckel bestehenden Gehäuse anders als bisher aufzuteilen, und zwar derart, daß aufgrund einer niedrigen Höhe der Gehäuseunterteile die Klemmvorrichtungen der eingebauten Installationsgeräte über dem Rand der Gehäuse liegen und daher von der Seite frei zugänglich sind. Auch eine solche Lösung ist zu verwerfen, weil wiederum eine Änderung des Gehäusesystems erforderlich wäre und ferner der für die Leitungsdurchführungen in den Wänden zur Verfügung stehende Querschnitt verringert wäre.

Der Erfindung liegt ausgehend hiervon die Aufgabe zugrunde, den Zugang zu den Klemmen der Installationsgeräte, insbesondere in der Ausführung mit berührungsgeschützten Klemmen, bei unveränderter Form und Ausführung der Gehäuse zu erleichtern.

Diese Aufgabe wird gemäß der Erfindung dadurch gelöst, daß die Fußteile der Traversen an dem Bodenteil unter Einfügung sich mit ihrer Längsachse etwa rechtwinklig zu dem Bodenteil erstreckender, bolzenförmiger Führungselemente befestigbar sind, die ein Herausziehen der Traversen aus dem Gehäuseunterteil um ein gewisses Maß gestatten, wobei die Führungselemente mit dem Bodenteil verbindbar sind, die Fußteile der Traversen zur Aufnahme der Führungselemente hülsenartig ausgebildet sind und wenigstens ein an dem Führungselement federnd anliegendes Klemmelement besitzen.

Durch die Herausziehbarkeit der Traversen aus dem Gehäuseunterteil wird die Zugänglichkeit der Klemmvorrichtungen der Installationsgeräte wesentlich verbessert. Dabei ist nur eine solche Verschiebbarkeit erforderlich, daß die Klemmvorrichtungen über die Vorderkante des Gehäuseunterteiles gelangen und die Leitungsenden auf diese Weise leicht in die Klemmvorrichtungen eingeführt werden können. Nach dem Anschluß aller Leitungen an die Installationsgeräte werden die Traversen wieder in ihre Ausgangsstellung zurückgeschoben, in der die Installationsgeräte die gleiche Lage bezüglich des Bodenteiles des Gehäuseunterteiles aufweisen wie bei bisher bekannten Ausführungen.

Die Erfindung ist in vorteilhafter Weise so zu verwirklichen, daß das Führungselement an seinem bodenseitigen Ende zur Befestigung an dem Bodenteil des Gehäuseunterteiles einen Gewindezapfen besitzt, daß ausgehend von einem mittleren, etwa zylindrischen Abschnitt des Führungselementes nahe seinem bodenseitigen Ende sowie nahe seinem kopfseitigen Ende zum Zusammenwirken mit dem federnden Klemmelement je ein Abschnitt mit etwa konisch abnehmendem Durchmesser angeordnet ist und daß das kopfseitige Ende des Führungselementes einen Endbereich mit einem gegenüber dem geringsten Durchmesser des kopfseitigen konischen Abschnittes vergrößerten Durchmesser aufweist. Die konisch geformten Abschnitte ergeben eine Rastwirkung beim Verschieben der Traversen von der Ausgangsstellung in die vorgezogene Montagestellung und umgekehrt. Mit dem Gewindezapfen ist das Führungselement in ein Muttergewinde eindrehbar, das in dem Gehäuseunterteil ohnehin für die bisherige Befestigung der Traversen vorgesehen ist. Das Gehäuseunterteil bedarf daher gegenüber der bisherigen Ausführung keiner Änderung.

Es empfiehlt sich, das Klemmelement als federnde und mit einer Rastnase versehene Zunge einstückig mit der Traverse auszubilden. Daher kann die Traverse wie bisher als Kunststoff-Formteil mit allen erforderlichen Merkmalen in einem einzigen Arbeitsgang hergestellt werden.

Sind eine größere Anzahl von Installationsgeräten und eine entsprechende Anzahl von Leitungen vorhanden, so entsteht eine gewisse Federwirkung, die bestrebt ist, die Traversen von dem Boden des Gehäuseunterteiles abzuheben. Dies kann nach einer weiteren Ausgestaltung der Erfindung dadurch vermieden werden, daß das Führungselement am Übergang zwischen seinem bodenseitigen konischen Abschnitt und dem mittleren zylindrischen Abschnitt eine ringförmige Stufe besitzt. Die ringförmige Stufe verstärkt die Haltekraft derart, daß ein bewußt erhöhter Kraftaufwand zur Lösung der Traversen aus ihrer Grundstellung erforderlich ist.

Zu einer guten Handhabung der neuen Traganordnung kann noch dadurch beigetragen werden, daß die hülsenartig ausgebildeten Fußteile der Traversen zur Frontseite des Gehäuses hin offen ausgebildet sind und daß der kopfseitige Endbereich der Führungselemente als Schraubenkopf ausgebildet ist. Dies ergibt die Möglichkeit, die Führungselemente vor dem Einsetzen der Traversen in die Gehäuse an den Traversen anzubringen und die so gebildeten Einheiten an dem Bodenteil des Gehäuses zu befestigen.

Die Erfindung wird im folgenden anhand des in den Figuren dargestellten Ausführungsbeispieles näher erläutert.

Die Figur 1 zeigt einen Ausschnitt aus einer Niederspannungs- Schaltanlage, die aus einzelnen Gehäusen baukastenartig zusammengesetzt ist.

Die Figur 2 zeigt in einer geschnittenen Seitenansicht ein mit Installationsgeräten bestücktes Gehäuse entsprechend der Figur 1, wobei oberhalb einer Mittellinie der normale Zustand mit aufgesetztem Deckel und unterhalb der Mittellinie ein Zustand dargestellt ist, der das Anschließen der Leitungen erleichtert.

Die Figur 3 zeigt eine Einzelheit im Bereich der Befestigung einer als Bestandteil einer Traganordnung für Installationsgeräte vorgesehenen Traverse.

Die Figur 4 zeigt eine Draufsicht auf die Anordnung gemäß der Figur 3.

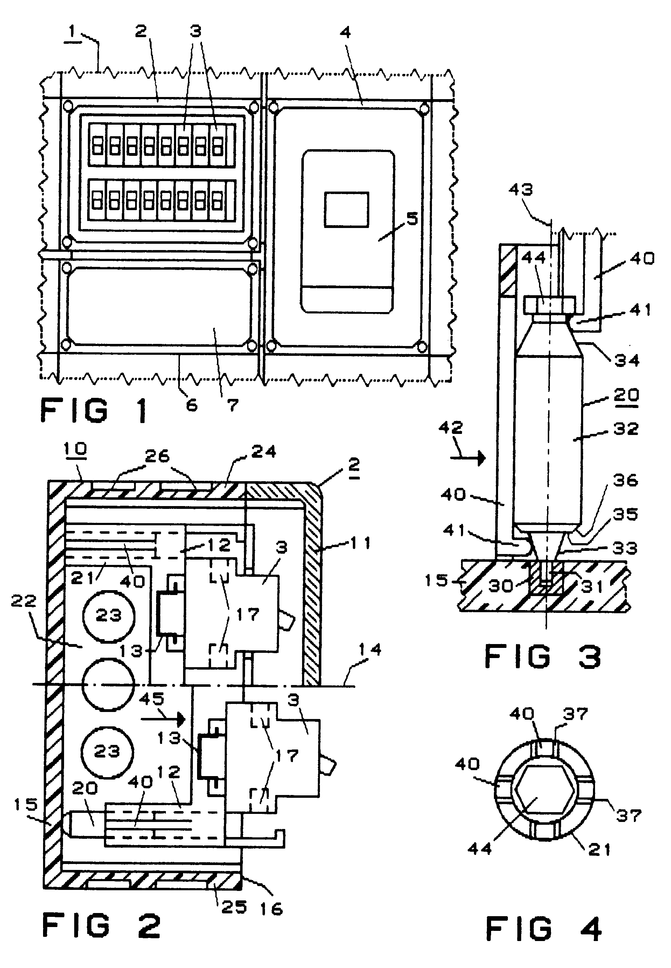

In der Figur 1 ist ein Ausschnitt aus einer Niederspannungs-Schaltanlage gezeigt, die aus Isolierstoffgehäusen mit aneinander angepaßten Abmessungen zusammengesetzt ist. Die Figur 1 zeigt insbesondere ein Gehäuse 2, in dem als Beispiel für Installationsgeräte Leitungsschutzschalter 3 untergebracht sind. Ein benachbartes größeres Gehäuse 4 enthält einen Zähler 5. Unterhalb des Gehäuses 2 befindet sich ein geschlossen gezeigtes Gehäuse 6 mit einem Deckel 7, das beispielsweise zur Aufnahme von Schmelzsicherungen vorgesehen sein kann.

Einzelheiten des Gehäuses 2 werden im folgenden anhand der Figur 2 näher erläutert, die das Gehäuse 2 in einem seitlichen Schnitt zeigt. Das Gehäuse 2 besitzt ein Gehäuseunterteil 10 sowie einen Deckel 11, die beide aus einem isolierenden Kunststoff, jedoch den unterschiedlichen Anforderungen entsprechend, hergestellt sind. In dem Gehäuseunterteil 10 befindet sich eine Traganordnung, zu der zwei parallel zueinander angeordnete Traversen 12 und sich zwischen diesen erstreckende Hutschienen 13 gehören. Auf den Hutschienen sind in bekannter Weise Installationsgeräte, im vorliegenden Fall die bereits anhand der Figur 1 erwähnten Leitungsschutzschalter 3, befestigt. Oberhalb einer in der Figur 2 strichpunktiert eingezeichneten Mittellinie 14 befindet sich die Traganordnung in ihrem Ruhezustand, in dem die Traversen 12 mit Fußteilen 21 auf einem Bodenteil 15 des Gehäuses 2 ruhen. Unterhalb der Mittellinie 14 ist die Traganordnung in einem ausgezogenen Zustand gezeigt, in dem die Leitungsschutzschalter 3 gegenüber einer frontseitigen Kante 16 des Gehäuses 2 soweit vorstehen, daß die Einführungsöffnungen gestrichelt angedeuteter Klemmvorrichtungen 17 vor der Vorderkante 16 liegen und somit Leitungsenden bequem in die Klemmvorrichtungen 17 eingeführt werden können. Das Herausziehen der Traganordnung aus dem Gehäuseunterteil 10 wird durch Führungselemente 20 in Verbindung mit einer hülsenartigen Gestaltung der Fußteile 21 der Traversen 12 ermöglicht.

Die Tiefe des Gehäuseunterteiles 10 entspricht einer bisher üblichen Gestaltung, so daß für den Durchtritt von Leitungen und Stromschienen durch die Wände des Gehäuseunterteiles 10 der gleiche Querschnitt wie bisher zur Verfügung steht. Für die Einführung der Leitungen vorgesehene ausbrechbare Bereiche sind in der Figur 2 im Bereich einer Seitenwand 22 als kreisförmige Vorprägungen 23 und im Bereich einer oberen Wand 24 und einer unteren Wand 25 als Bereiche 26 mit verringertem Querschnitt dargestellt.

Einzelheiten der verschiebbaren Anordnung der Traversen sind in der Figur 3 dargestellt. Gegenüber der Stellung der Teile gemäß der Figur 2 ist in der Figur 3 eine um 90° gedrehte Darstellung gewählt. Der Bodenteil 15 des Gehäuseunterteiles 10 enthält eine Gewindebuchse 30, in die mit einem Gewindezapfen 31 eines der bolzenförmigen Führungselemente 20 eingeschraubt und befestigt ist. Das Führungselement 20 besitzt einen mittleren zylindrischen Abschnitt 32 sowie anschließend daran an seinem unteren Ende einen konisch verjüngten Bereich 33 und an seinem oberen Ende einen gleichfalls konisch verjüngten Bereich 34. Am Übergang zwischen dem zylindrischen Abschnitt 32 und dem konischen Bereich 33 sind ferner eine kurze Schräge 36 und ein ringförmiger Absatz 35 als Übergang vorgesehen.

Die hülsenartigen Fußteile 21 der Traversen 12 sind, wie näher der Figur 4 zu entnehmen ist, durch Zwischenräume 37 derart unterteilt, daß insgesamt vier federnde Zungen 40 gebildet sind, die jeweils an ihrem unteren Ende eine Rastnase 41 (Figur 3) besitzen. Die federnden Zungen 40 werden bei der Herstellung der Traversen durch entsprechende Gestaltung des Spritzwerkzeuges einstückig angeformt. Die zur Herstellung der Traversen üblicherweise eingesetzten Kunststoffe verfügen über eine ausreichende Federung derart, daß die Zungen 40 in der Richtung eines in der Figur 3 gezeigten Pfeiles 42 eine Klemmkraft gegen das Führungselement 20 ausüben. Abweichend von dem gezeigten Ausführungsbeispiel kann eine geringere oder größere Anzahl von Zungen vorgesehen sein.

Links von der in der Figur 3 gezeigten Mittellinie 43 ist der Zustand gezeigt, der dem oberen Teil der Figur 2 entspricht. Die Rastnasen 41 der Zungen 40 liegen dabei an dem konischen Abschnitt 33 unterhalb der ringförmigen Stufe 35 an. Auf diese Weise werden die Traversen auch dann sicher in ihrer normalen Stellung gehalten, wenn durch eine Vielzahl von an die Leitungsschutzschalter 3 angeschlossenen Leitungen eine die Traganordnung von dem Bodenteil 15 des Gehäuseunterteiles 10 abhebende Kraft entstehen sollte.

Im rechten Teil der Figur 3 ist der Zustand gezeigt, der dem unteren Teil der Figur 2 entspricht. Durch einen bewußten Kraftaufwand ist die Traganordnung in die Montagestellung vorgezogen worden, um Leitungen an die Leitungsschutzschalter 3 anschließen zu können. Hierbei gleiten die Rastnasen 41 zunächst über die Schräge 36 und den zylindrischen Mittelteil 32 des Führungselementes 20, bis sie auf den konischen Abschnitt 34 gelangen und sich aufgrund der Keilwirkung eine weitere stabile Raststellung ergibt. Diese ist durch einen Endbereich 44 des Führungselementes 20 begrenzt, der entsprechend der Figur 4 als Sechskant-Schraubenkopf ausgebildet ist.

Die Ausnehmungen in den Fußteilen 21 der Traversen 12 sind zur Frontseite des Gehäuseunterteiles 10 offen, so daß Zugang zu dem Endteil 44 mit Sechskant-Kopf besteht. Auf diese Weise können die Traversen 12 mit eingesetzten Führungselementen 20 in das Gehäuseunterteil 10 eingebracht und mittels eines üblichen Steckschlüssels auf einfache Weise befestigt werden. Die Führungsteile 20 können aus einem beliebigen geeigneten Werkstoff hergestellt sein. Es ist gleichermaßen möglich, sie als Metallteile oder als Kunststoffteile herzustellen, wobei das Gewinde an dem Gewindeteil 31 ohne zusätzlichen Bearbeitungsgang hergestellt werden kann.

## Patentansprüche

1. Traganordnung für elektrische Installationsgeräte (3) mit Fußteile (21) aufweisenden Traversen (12) und mit einem die Traversen (12) aufnehmenden Gehäuse (2), bestehend aus einem Gehäuseunterteil (10) und einem dieses abschließenden Deckel (11), wobei die Wände (22, 24, 25) des Gehäuseunterteiles (10) Vorprägungen (23, 26) zur Herstellung von Durchtrittsöffnungen für zu einem benachbarten Gehäuse (4, 6) führende Stromschienen und/oder Leitungen besitzen und wobei die Traversen (12) mit ihren Fußteilen (21) an einem Bodenteil (15) des Gehäuseunterteiles (10) befestigbar sind, **dadurch gekennzeichnet**, daß die Fußteile (21) der Traversen (12) an dem Bodenteil (15) unter Einfügung sich mit ihrer Längsachse etwa rechtwinklig zu dem Bodenteil erstreckender, bolzenförmiger Führungselemente (20) befestigbar sind, die ein Herausziehen der Traversen (12) aus dem Gehäuseunterteil (10) um ein gewisses Maß gestatten, wobei die Führungselemente (20) mit dem Bodenteil (15) verbindbar sind, die Fußteile (21) der Traversen (12) zur Aufnahme der Führungselemente (20) hülsenartig ausgebildet sind und wenigstens ein an dem Führungselement (20) federnd anliegendes Klemmelement (40) besitzen.

2. Traganordnung nach Anspruch 1,
**dadurch gekennzeichnet**, daß das Führungselement (20) an seinem bodenseitigen Ende zur Befestigung an dem Bodenteil (15) des Gehäuseunterteiles (10) einen Gewindezapfen (31) besitzt, daß ausgehend von einem mittleren, etwa zylindrischen Abschnitt des Führungselementes (20) nahe seinem bodenseitigen Ende sowie nahe seinem kopfseitigen Ende zum Zusammenwirken mit dem federnden Klemmelement (40) je ein Abschnitt (33, 34) mit etwa konisch abnehmendem Durchmesser angeordnet ist und daß das kopfseitige Ende des Führungselementes (20) einen Endbereich (44) mit einem gegenüber dem geringsten Durchmesser des kopfseitigen konischen Abschnittes (34) vergrößerten Durchmesser aufweist.

3. Traganordnung nach Anspruch 2,
**dadurch gekennzeichnet**, daß das Klemmelement (40) als federnde und mit einer Rastnase (41) versehene Zunge einstückig mit der Traverse (12) ausgebildet ist.

4. Traganordnung nach Anspruch 2,
**dadurch gekennzeichnet,** daß das Führungselement (20) am Übergang zwischen seinem bodenseitigen konischen Abschnitt (33) und dem mittleren zylindrischen Abschnitt (32) eine ringförmige Stufe (35) besitzt.

5. Traganordnung nach Anspruch 2,
**dadurch gekennzeichnet**, daß die hülsenartig ausgebildeten Fußteile (21) der Traversen (12) zur Frontseite des Gehäuses (2) hin offen ausgebildet sind und daß der kopfseitige Endbereich (44) der Führungselemente (20) als Schraubenkopf ausgebildet ist.

## Claims

1. Supporting arrangement for electrical installation devices (3) with cross arms (12) having base parts (21) and with a housing (2) accommodating the cross arms (12), the housing comprising a lower housing part (10) and a cover (11) sealing it, whereby the walls (22, 24, 25) of the lower housing part (10) have knockouts (23, 26) to make passage openings for conductor rails and/or lines leading to an adjacent housing (4, 6) and whereby the cross arms (12) can be fastened by their base parts (21) to a floor part (15) of the lower housing part (10), characterized in that the base parts (21) of the cross arms (12) can be fastened to the floor part (15) with the insertion of bolt-shaped guide elements (20) extending with their longitudinal axis approximately at right angles to the floor part, which guide elements allow the cross arms (12) to be extracted from the lower housing part (10) to a certain extent, whereby the guide elements (20) can be connected to the floor part (15), the base parts (21) of the cross arms (12) are constructed so as to be sleeve-like to accommodate the guide elements (20) and have at least one clamping element (40) resiliently abutting the guide element (20).

2. Supporting arrangement according to claim 1, characterized in that the guide element (20) at its floor-side end has a threaded stem (31) for fastening to the floor part (15) of the lower housing part (10) a threaded stem (31), in that proceeding from a centre, approximately cylindrical section of the guide element (20) near its floor-side end and near its head-side end for cooperation with the resilient clamping element (40) in each case a section (33, 34) with an approximately conically decreasing diameter is arranged and in that the head-side end of the guide element (20) has an end region (44) with a diameter which is enlarged compared with the smallest diameter of the head-side conical section (34).

3. Supporting arrangement according to claim 2, characterized in that the clamping element (40) is constructed in one piece with the cross arm (12) as a resilient tongue provided with a detent (41).

4. Supporting arrangement according to claim 2, characterized in that at the transition between its floor-side conical section (33) and the centre cylindrical section (32) the guide element (20) has an annular step (35).

5. Supporting arrangement according to claim 2, characterized in that the base parts (21) of the cross arms (12), constructed so as to be sleeve-like, are constructed to be open towards the front side of the housing (2) and in that the head-side end region (44) of the guide elements (20) is constructed as a screw head.

## Revendications

1. Dispositif de support pour appareils d'installations électriques (3) comportant des traverses (12) possédant des pieds (21), et un boîtier (2) qui loge les traverses (12) et est constitué par une partie inférieure (10) et un couvercle (11) fermant cette partie inférieure, et dans lequel les parois (22,24,25) de la partie inférieure (10) du boîtier comportent des empreintes (23,26) pour la formation d'ouvertures de passage pour des rails conducteurs et/ou des lignes aboutissant à un boîtier voisin (4,6), et dans lequel les traverses (12) peuvent être fixées, par leurs pieds (21), sur une partie de fond (15) de la partie inférieure (10) du boîtier, caractérisé par le fait que les pieds (21) des traverses (12) peuvent être fixés sur la partie de fond (15) moyennant l'insertion d'éléments de guidage en forme de boulons (20), dont les axes longitudinaux s'étendent approximativement perpendiculairement à la partie de fond, et qui permettent de retirer à un certain degré les traverses (12) hors de la partie inférieure (10) du boîtier, les éléments de guidage (20) pouvant être reliés à la partie de fond (15), tandis que les pieds (21) des traverses (12) sont réalisés en forme de douilles pour recevoir les éléments de guidage (20) et possèdent au moins un élément de serrage (40) s'appliquant élastiquement contre l'élément de guidage (20).

2. Dispositif de support suivant la revendication 1, caractérisé par le fait que l'élément de guidage (20) possède, au niveau de son extrémité tournée du côté du fond, une tige filetée (31) pour la fixation sur la partie de fond (15) de la partie inférieure (10) du boîtier, qu'à partir d'une partie médiane approximativement cylindrique de l'élément de guidage (20) sont disposés, à proximité de son extrémité, tournée du côté du fond et à proximité de son extrémité, tournée vers la tête, des tronçons respectifs (33,34) possédant des diamètres qui diminuent selon des degrès approximativement coniques, de manière à coopérer avec l'élément de serrage élastique (40), et que l'extrémité, située du côté de la tête, de l'élément de guidage (20) comporte une zone d'extrémité (44) possédant un diamètre qui est supérieur au diamètre le plus faible du tronçon conique (34) situé du côté de la tête.

3. Dispositif de support suivant la revendication 2, caractérisé par le fait que l'élément de serrage (40) est agencé sous la forme d'une languette élastique, qui est pourvue d'un bec d'encliquetage (41) et est réunie d'un seul tenant à la traverse (12).

4. Dispositif de support suivant la revendication 2, caractérisé par le fait que l'élément de guidage (20) possède une partie étagée annulaire (35), au niveau de la jonction entre sa section conique (3) située du côté du fond et la section médiane cylindrique (32).

5. Dispositif de support suivant la revendication 2, caractérisé par le fait que les pieds (21), réalisés en forme de douilles, des traverses (12) sont agencés en étant ouverts en direction de la face frontale du boîtier (2) et que la partie d'extrémité (44), située du côté de la tête, des éléments de guidage (20) est agencée sous la forme d'une tête de vis.
